# EUROPÄISCHE PATENTSCHRIFT

(11) **EP 2 946 969 B1**
(45) Veröffentlichungstag und Bekanntmachung des Hinweises auf die Patenterteilung: **14.11.2018**
(21) Anmeldenummer: 15159937.0
(22) Anmeldetag: 19.03.2015
(51) Int. Cl.: B60N 2/885, B60N 2/856, B60N 2/891

(54) **KOPFSTÜTZE FÜR EINEN FAHRZEUGSITZ**
HEAD REST FOR A VEHICLE SEAT
REPOSE-TÊTE POUR UN SIÈGE DE VÉHICULE

(30) Priorität: 23.05.2014 DE 102014209888
(43) Veröffentlichungstag der Anmeldung: 25.11.2015
(73) Patentinhaber: Ford Global Technologies, LLC, Dearborn, MI 48126 (US)
(72) Erfinder: Wagner, Uwe, 42929 Wermelskirchen (DE); Schauf, Carsten, 42799 Leichlingen (DE); Vas, Kilian, 50670 Köln (DE); Hari, Daniel, 50735 Köln (DE)
(74) Vertreter: Dörfler, Thomas

(56) Entgegenhaltungen:
- EP-A1- 1 764 261
- DE-A1- 19 653 516
- DE-A1-102010 003 184
- DE-A1-102012 021 110
- JP-U- H01 150 047

## Beschreibung

Die vorliegende Erfindung betrifft eine Kopfstütze für einen Fahrzeugsitz nach dem Oberbegriff des Anspruchs 1 sowie einen Fahrzeugsitz nach dem Oberbegriff des Anspruchs 6.
Seitenteile an derartigen Kopfstützen dienen dazu, beim Ruhen und Schlafen eines Fahrzeuginsassen dessen Kopf gegen Abrutschen von der Kopfstütze zu sichern.
Eine Kopfstütze dieser Art ist beispielsweise in der EP 1 764 261 A1 offenbart. Sie zeigt eine Kopfstütze für einen Fahrzeugsitz mit einem Mittelteil, das ein Befestigungsmittel zur Befestigung des Mittelteils an einer Rückenlehne des Fahrzeugsitzes aufweist und zwei Seitenteile, die in einer Stützstellung seitlich am Mittelteil über dessen Vorderfläche vorstehen und in einer Nichtstützstellung in die Kontur des Mittelteils aufgenommen sind. Beide Seitenteile sind über einen entlang eines unteren Rands der Kopfstütze verlaufenden Nackenstützabschnitt miteinander verbunden, so dass beide Seitenteile nur gemeinsam um eine an einer Oberseite der Kopfstütze angeordnete Drehachse zwischen der Stützstellung und der Nichtstützstellung parallel zu einer Seitenfläche des Mittelteils verschwenkt werden können.
Eine weitere gattungsgemäße Kopfstütze zeigt die JP H01 150047 U. Bei dieser Kopfstütze können zwei seitlich an einem Mittelteil der Kopfstütze angeordnete Seitenteile jeweils parallel zu einer entsprechenden Seitenfläche des Mittelteils zwischen einer Stützstellung und einer Nichtstützstellung verschoben werden. Hierzu ist ein relativ aufwändiger Verstellmechanismus vorgesehen, der einen auf einem Drehgelenk gelagerten Nocken und ein durch den Nocken verschiebbares Doppelgelenk vorsieht, um zwischen ihren beiden Enden liegende mittlere Abschnitte der in der Nichtstützstellung I-förmigen Seitenteile nach vorne in die Stützstellung schieben zu können, so dass die mittleren Abschnitte der beiden Seitenteile in der Stützstellung über die Vorderfläche des Mittelteils vorstehen.

Auch aus der DE 10 2012 021 110 A1 ist eine gattungsgemäße Kopfstütze bekannt, die zwei seitlich an einem Mittelteil angeordnete L-förmige Seitenteile aufweist, die parallel zu einer Seitenfläche des Mittelteils als Ganzes verschiebbar sind, so dass beide Enden der L-förmigen Seitenteil bei der Verschiebung aus einer Nichtstützstellung in eine Stützstellung aus ihrer Ursprungslage gebracht werden.
Des Weiteren beschreibt die DE 196 53 516 A1 eine Kopfstütze mit zwei seitlich an einem Mittelteil angeordneten Seitenteilen, die zwischen einer Nichtstützstellung und einer Stützstellung jeweils unabhängig voneinander um eine an einem oberen Abschnitt des Mittelteils angeordnete Drehachse verschwenkbar sein.
Die US 6 220 668 B1 offenbart eine Kopfstütze umfassend ein mittleres Kopfpolsterteil und zwei dem Kopfpolsterteil zugeordnete Seitenteile, die in Gebrauchslage seitlich am mittleren Kopfpolsterteil über die Polsterfront vorstehen und in ihrer Nichtgebrauchslage in die Kontur des mittleren Kopfpolsterteils einschwenkbar sind. Die beiden Seitenteile sind spiegelsymmetrisch zur vertikalen Mittellinie des mittleren Kopfpolsters schwenkbar und überdecken in der Nichtgebrauchslage die Rückseite des mittleren Kopfpolsterteils.

Ferner ist aus der US 6 120 099 A eine Kopfstütze für einen Fahrzeugsitz mit einer Vorderfläche und zwei Seitenflächen bekannt, wobei die Kopfstütze zwei aus den Seitenflächen ausfahrbare Elemente aufweist, die zu Beginn vollständig in der Kopfstütze aufgenommen sind, die aber dazu ausgelegt sind, sich mit einer Gleitbewegung in eine ausgefahrene Position zu bewegen. Die Elemente erstrecken sich dann seitlich relativ zu der Kopfstütze und weiterhin relativ zu der Kopfstütze nach vorn, wobei sie eine zusätzliche Abstützung für den Kopf eines Fahrgastes in dem Sitz bilden.
Die DE 10 2004 058 788 A1 beschreibt einen Fahrzeugsitz mit einer Kopfstütze, wobei die Kopfstütze zumindest ein schwenkbares Polsterteil aufweist. Um eine komfortable Verstellung der Kopfstütze zu ermöglichen, ist vorgesehen, dass in dem Polsterteil eine mit einem Fluid befüllbare Blase zwischen Polsterträger und Polsterteil zum Schwenken des Polsterteils angeordnet ist.

Ferner ist aus der GB 2 415 616 A ein Fahrzeugsitz mit einer Kopfstütze und zwei Seitenstützen bekannt, wobei letztere schwenkbar an einer Rückenlehne des Fahrzeugsitzes angeordnet sind, um die Seite eines Kopfes eines auf dem Fahrzeugsitz sitzenden Fahrzeuginsassen zu stützen. Die Seitenstützen können in verschiedene Gebrauchsstellungen geschwenkt werden, wodurch sie an unterschiedliche Größen der Fahrzeuginsassen angepasst werden können.
In der DE 601 07 610 T2 ist eine Kopfstütze mit einem zweigeteilten Kissen offenbart, wobei ein nach vorne schwenkbares U-förmiges Kissen ein Mittelkissen umgreift, und beide Kissen getrennt voneinander höhenverstellbar sind. Um den Kopf eines Passagiers abzustützen, kann das U-förmige Kissen nach vorne geklappt werden, so dass die Öffnung des Us nach vorne zeigt und die beiden U-Schenkel eine seitliche Stützwirkung für den Kopf entfalten, während das Mittelkissen im Wesentlichen die Stützwirkung nach hinten übernimmt.
Vor diesem Hintergrund liegt der vorliegenden Erfindung die Aufgabe zugrunde, eine Kopfstütze für einen Fahrzeugsitz mit kompaktem Kleinstmaß und ästhetisch ansprechender Formgebung bereitzustellen, die darüber hinaus komfortabel und sicher ist. Außerdem soll die Kopfstütze einfach zu bedienen und universell einsetzbar sein. Ferner soll ein Fahrzeugsitz mit einer entsprechenden Kopfstütze bereitgestellt werden, der ebenfalls von einem optimierten Bauvolumen profitiert.
Diese Aufgabe wird durch eine Kopfstütze mit den Merkmalen des Anspruchs 1 sowie durch einen Fahrzeugsitz mit den Merkmalen des Anspruchs 6 gelöst. Weitere, besonders vorteilhafte Ausgestaltungen der Erfindung offenbaren die Unteransprüche.
Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich, solange der resultierende Gegenstand zum Schutzumfang gehört, der durch die Ansprüche definiert ist.

Erfindungsgemäß umfasst eine Kopfstütze für einen Fahrzeugsitz ein Mittelteil, ein Befestigungsmittel und wenigstens ein Seitenteil. Das Befestigungsmittel ist dazu ausgelegt, das Mittelteil an einer Rückenlehne des Fahrzeugsitzes zu befestigen. Bevorzugt sind das Mittelteil und das Seitenteil gepolstert. Des Weiteren steht das Seitenteil in einer Stützstellung seitlich am Mittelteil über dessen Vorderfläche hervor und ist in einer Nichtstützstellung in die Kontur des Mittelteils aufgenommen. Erfindungsgemäß ist das Seitenteil an einer Seitenfläche des Mittelteils parallel zu dieser verschiebbar angebracht.

Als Vorderfläche des Mittelteils ist im Sinne der vorliegenden Erfindung jene Fläche zu verstehen, die bei einem in das Fahrzeug eingebauten Zustand der Kopfstütze einer Front des Fahrzeugs zugewandt ist. Dementsprechend ist die Seitenfläche des Mittelteils einer Seite des Fahrzeugs zugewandt. Die Vorderfläche des Mittelteils dient im Wesentlichen dazu, den Kopf eines auf dem Fahrzeugsitz befindlichen Fahrzeuginsassen nach hinten abzustützen, wohingegen das Seitenteil in seiner Stützstellung ein seitliches Abrutschen des Kopfs des Fahrzeuginsassen von dem Mittelteil verhindert.

In seiner Nichtstützstellung ist das Seitenteil bevorzugt in die Kontur des Mittelteils aufgenommen, das heißt, die Vorderfläche des Seitenteils fluchtet im Wesentlichen mit der Vorderfläche des Mittelteils, so dass das Mittelteil und das Seitenteil eine gemeinsame Vorderfläche der Kopfstütze bilden. Dementsprechend lässt sich das Mittelteil, insbesondere hinsichtlich seiner Breite, auf ein kompaktes Kleinstmaß hin auslegen, wobei dennoch ein sicheres Abstützen des Kopfs des Fahrzeuginsassen sowohl in der Stützstellung des Seitenteils als auch in dessen Nichtstützstellung gewährleistet ist. Die Integration des Seitenteils in seiner Nichtstützstellung in die Kontur des Mittelteils realisiert zudem eine mit ästhetisch ansprechenden Außenflächen versehene, einheitliche Kopfstütze, die problemlos an das Innenraumdesign des Fahrzeugs angepasst werden kann.

Die Verschiebbarkeit des Seitenteils parallel zur Seitenfläche des Mittelteils stellt für den Fahrzeuginsassen eine intuitive Handhabung zur Verstellung des Seitenteils zwischen der Stützstellung und der Nichtstützstellung dar. Besondere Kenntnisse, komplizierte Handgriffe oder zusätzliche Werkzeuge sind zur Verstellung des Seitenteils vorteilhafterweise nicht erforderlich. Außerdem können in unmittelbarer seitlicher oder rückwärtiger Nähe zur Kopfstütze im Fahrzeug vorhandene Objekte, zum Beispiel auf einer Hutablage des Fahrzeugs abgelegte Gepäck- oder Bekleidungsstücke, das Verschieben des Seitenteils zwischen seiner Stützstellung und seiner Nichtstützstellung nicht behindern, wie es beispielsweise beim seitlichen Verschwenken des Seitenteils hinter das Mittelteil der Fall sein könnte, was die Handhabung der Kopfstütze für den Fahrzeuginsassen noch komfortabler gestaltet.
Gemäß der Erfindung ist das Seitenteil im Wesentlichen L-förmig ausgebildet und flexibel. Bevorzugt ist in diesem Fall ein Ende des L-förmigen Seitenteils an der Seitenfläche des Mittelteils schwenkbeweglich angebracht, wohingegen das andere Ende des L-förmigen Seitenteils an der Seitenfläche des Mittelteils längsverschiebbar angebracht ist. Dementsprechend werden die beiden Schenkel des L-förmigen Seitenteils bei der Verschiebung aus der Nichtstützstellung in die Stützstellung geringfügig aufeinander zu gebogen. Diese Relativbewegung der beiden Schenkel wird durch die Flexibilität des Seitenteils im Wesentlichen an der Verbindungsstelle der beiden Schenkel des Seitenteils ausgeglichen, indem diese nachgibt und etwas komprimiert wird. Die Komprimierung erzeugt eine Federkraft, die der aufgezwungenen Relativbewegung der beiden Schenkel entgegengerichtet ist. Diese Federkraft kann wiederum dazu genutzt werden, das Seitenteil in der Stützstellung aufgrund der in der längsverschiebbaren Lagerung des einen Schenkels an der Seitenfläche des Mittelteils auftretenden Reibungskraft festzuklemmen, so dass ein zusätzlicher Arretiermechanismus zum Halten des Seitenteils in der Stützstellung nicht vorgesehen werden muss.
Eine vorteilhafte Ausgestaltung der Erfindung sieht vor, dass das Mittelteil im Wesentlichen L-förmig ausgebildet ist, wobei ein Schenkel der L-Form einer Oberseite des Mittelteils entspricht und der andere Schenkel der Vorderfläche des Mittelteils entspricht. Als Oberseite des Mittelteils ist jene Seite bzw. Fläche zu verstehen, die bei in dem Fahrzeug eingebautem Zustand der Kopfstütze einer Oberseite des Fahrzeugs, das heißt dem Dach des Fahrzeugs, zugewandt ist. Dementsprechend lässt sich das Mittelteil der Kopfstütze raumsparend an die Kontur der Rückenlehne des Fahrzeugsitzes anpassen, wodurch eine besonders kompakte Anordnung der Kopfstütze und des Fahrzeugsitzes realisierbar ist.

Gemäß einer noch weiteren vorteilhaften Ausgestaltung der Erfindung ist das Befestigungsmittel dazu ausgelegt, das Mittelteil relativ zur Rückenlehne um eine horizontale Schwenkachse zwischen wenigstens einer Gebrauchsstellung und einer Nichtgebrauchsstellung schwenkbar zu lagern. Beispielsweise ist das Mittelteil in einem Winkelbereich von etwa 180 ° um die horizontale Schwenkachse schwenkbar. Bevorzugt bildet das Mittelteil in der Stützstellung im Wesentlichen eine Verlängerung der Rückenlehne aus. In der Nichtgebrauchsstellung ist das Mittelteil durch Verschwenkung in Richtung des Hecks des Fahrzeugs umgeklappt. Hierdurch wird einerseits der Einbau jeglicher Art von Kindersitzen auf dem Fahrzeugsitz erleichtert, da die Kopfstütze in ihrer umgeklappten Nichtgebrauchsstellung kein Hindernis für den Kindersitz darstellen kann, und andererseits wird die rückwärtige Sicht eines Fahrzeugführers durch die Kopfstütze in ihrer umgeklappten Nichtgebrauchsstellung nur wenig beeinträchtigt.

Eine noch weitere vorteilhafte Ausgestaltung der Erfindung sieht vor, dass das Befestigungsmittel zwei Stützstreben umfasst, an denen das Mittelteil schwenkbeweglich gelagert ist, und das Mittelteil im Bereich der Lagerstellen der Stützstreben an dem Mittelteil jeweils eine schlitzförmige Aussparung aufweist, die sich von der jeweiligen Lagerstelle bis zu einer Rückseite des Mittelteils erstreckt. Als Rückseite des Mittelteils ist jene Seite bzw. Fläche zu verstehen, die in der Gebrauchsstellung der Kopfstütze dem Heck des Fahrzeugs zugewandt ist. Die Aussparungen ermöglichen das ungehinderte Verschwenken des Mittelteils zwischen der Gebrauchsstellung und der umgeklappten Nichtgebrauchsstellung.

Gemäß einer weiteren vorteilhaften Ausgestaltung der Erfindung umfasst das Befestigungsmittel Mittel zur Höhenverstellung der Kopfstütze. Dadurch kann diese speziell an den auf dem Fahrzeugsitz sitzenden Fahrzeuginsassen angepasst und so eine verbesserte Kopfanpassung und ein optimierter Schutz gewährleistet werden.

Gemäß einem weiteren Aspekt umfasst die Erfindung einen Fahrzeugsitz mit einer Rückenlehne und einer daran angeordneten Kopfstütze gemäß einer der vorstehend aufgeführten Ausgestaltungen. Durch die oben beschriebene Möglichkeit, die Kopfstütze in eine Nichtgebrauchsstellung zu überführen, kann ein verbessertes Bauvolumen des Fahrzeugsitzes erreicht werden. Insbesondere in der Nichtgebrauchsstellung der Kopfstütze zeigt sich der Fahrzeugsitz in einer insgesamt kompakteren Ausgestaltung, da die vertikale Erstreckung der Kopfstütze bezüglich des Fahrzeugsitzes in der Nichtgebrauchsstellung am geringsten ist.

Eine weitere vorteilhafte Ausgestaltung der Erfindung sieht vor, dass die Rückenlehne des Fahrzeugsitzes umklappbar ist. Beispielsweise handelt es sich um die Fahrzeugsitze eines Fahrzeugs, deren Rückenlehne zum Beispiel zur Vergrößerung des Kofferraums oder zum Einstieg in den Fond des Fahrzeugs umgeklappt werden können. Befindet sich die Kopfstütze des Fahrzeugsitzes in der umgeklappten Nichtgebrauchsstellung, so ist zum Umklappen des Fahrzeugsitzes die Platzanforderung an den Innenraum des Fahrzeugs gegenüber dem Fahrzeugsitz mit der Kopfstütze in Gebrauchsstellung geringer. Auch für umklappbare Vordersitze ist eine derartige Ausgestaltung aus oben genannten Gründen hinsichtlich der Sicht und des Bauvolumens vorteilhaft.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine perspektivische Rückansicht einer Ausführungsform einer erfindungsgemäßen Kopfstütze,
- Fig. 2: eine Seitenansicht der Kopfstütze aus Fig. 1 in einer seitlichen Nichtstützstellung,
- Fig. 3: eine Seitenansicht der Kopfstütze aus Fig. 1 in einer seitlichen Stützstellung,
- Fig. 4: eine perspektivische Vorderansicht der an einer Rückenlehne eines Fahrzeugsitzes angebrachten Kopfstütze aus Fig. 1 in einer ersten Nichtgebrauchsstellung,
- Fig. 5: eine perspektivische Vorderansicht der an einer Rückenlehne eines Fahrzeugsitzes angebrachten Kopfstütze aus Fig. 1 in einer zweiten Nichtgebrauchsstellung,
- Fig. 6: eine perspektivische Vorderansicht der an einer Rückenlehne eines Fahrzeugsitzes angebrachten Kopfstütze aus Fig. 1 in einer ersten Gebrauchsstellung und
- Fig. 7: eine perspektivische Vorderansicht der an einer Rückenlehne eines Fahrzeugsitzes angebrachten Kopfstütze aus Fig. 1 in einer zweiten Gebrauchsstellung mit zusätzlicher seitlichen Stützstellung.

In den unterschiedlichen Figuren sind hinsichtlich ihrer Funktion gleichwertige Teile stets mit denselben Bezugszeichen versehen, so dass diese in der Regel auch nur einmal beschrieben werden.

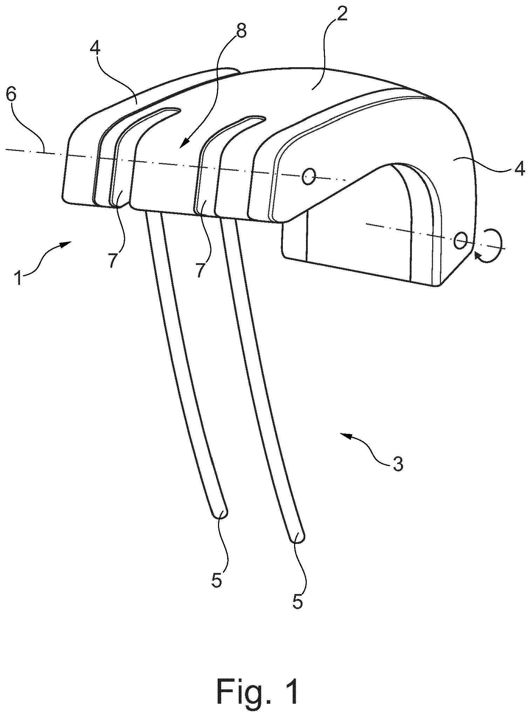

Fig. 1 stellt eine perspektivische Rückansicht einer Ausführungsform einer erfindungsgemäßen Kopfstütze 1 für einen Fahrzeugsitz (in Fig. 1 nicht dargestellt) dar. Die Kopfstütze 1 umfasst ein Mittelteil 2, ein Befestigungsmittel 3 zur Befestigung des Mittelteils 2 an einer Rückenlehne des Fahrzeugsitzes und zwei Seitenteile 4. Die beiden Seitenteile 4 sind identisch ausgebildet und in gleicher Weise an dem Mittelteil 2 angebracht, so dass die Erläuterungen hierin bezüglich eines Seitenteils 4 gleichermaßen für das andere Seitenteil 4 gelten. Wie Fig. 1 zu entnehmen ist, sind bei der dargestellten Ausführungsform der Kopfstütze 1 sowohl das Mittelteil 2 als auch die beiden Seitenteile 4 im Wesentlichen L-förmig ausgebildet. Zudem sind die Seitenteile 4 bei der gezeigten Ausführungsform der Kopfstütze 1 flexibel ausgebildet, wie nachstehend noch ausführlicher erläutert wird.

Wie Fig. 1 weiter zu entnehmen ist, umfasst das Befestigungsmittel 3 bei der dargestellten Ausführungsform der Kopfstütze 1 zwei Stützstreben 5, an denen das Mittelteil 2 schwenkbeweglich gelagert ist. Um eine ungehinderte Schwenkbewegung des Mittelteils 2 relativ zur Rückenlehne des Fahrzeugsitzes um eine horizontale Schwenkachse 6 zwischen wenigstens einer Gebrauchsstellung und einer Nichtgebrauchsstellung der Kopfstütze 1 zu ermöglichen, weist das Mittelteil 2 im Bereich der Lagerstellen der Stützstreben 5 am Mittelteil 2 jeweils eine schlitzförmige Aussparung 7 auf. Wie in Fig. 1 zu erkennen ist, erstreckt sich jede Aussparung 7 von der jeweiligen Lagerstelle bis zu einer Rückseite 8 des Mittelteils 2.

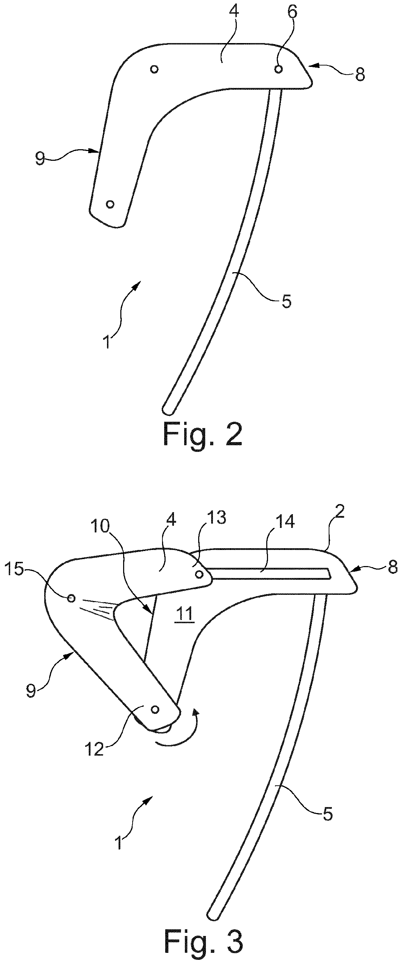

Fig. 2 stellt eine Seitenansicht der Kopfstütze 1 aus Fig. 1 in einer seitlichen Nichtstützstellung dar. In dieser Nichtstützstellung des Seitenteils 4 ist das Seitenteil 4 in die Kontur des Mittelteils 2 aufgenommen. Mit anderen Worten fluchtet eine Vorderfläche 9 des Seitenteils 4 mit einer Vorderfläche 10 (sichtbar in Fig. 3) des Mittelteils 2, so dass das Mittelteil 2 und das Seitenteil 4 eine aus ihren jeweiligen Vorderflächen 9 und 10 gebildete gemeinsame Vorderfläche der Kopfstütze 1 bilden. Die Vorderflächen 9 und 10 dienen dazu, den Kopf eines Fahrzeuginsassen nach hinten abzustützen.

Fig. 3 stellt eine Seitenansicht der Kopfstütze 1 aus Fig. 1 in einer seitlichen Stützstellung dar. Wie in Fig. 3 zu erkennen ist, steht das Seitenteil 4 der Kopfstütze 1 in dieser Stützstellung seitlich am Mittelteil 2 über dessen Vorderfläche 10 hervor. Somit verhindert das Seitenteil 4 in seiner dargestellten Stützstellung ein seitliches Abrutschen des Kopfs des Fahrzeuginsassen von der Vorderfläche 10 des Mittelteils 2 und bietet dem Kopf zugleich Schutz gegen seitliche Krafteinwirkung. Ferner ist in Fig. 3 eine Seitenfläche 11 des Mittelteils 2 zu erkennen, an welcher das Seitenteil 4 parallel zu dieser verschiebbar angebracht ist.

Wie bereits oben erwähnt wurde, sind bei der in den Figuren dargestellten Ausführungsform der Kopfstütze 1 sowohl das Mittelteil 2 als auch die Seitenteile 4 L-förmig ausgebildet. Fig. 3 ist weiter zu entnehmen, dass ein Ende 12 des L-förmigen Seitenteils 4 an der Seitenfläche 11 des Mittelteils 2 schwenkbeweglich angebracht ist, wohingegen das andere Ende 13 des L-förmigen Seitenteils 4 an der Seitenfläche 11 des Mittelteils 2 längsverschiebbar angebracht ist. Hierzu weist das Mittelteil 2 eine entsprechende Längsführung 14 auf.

Da das Seitenteil 4 bei der dargestellten Ausführungsform der Kopfstütze 1, wie bereits erwähnt wurde, flexibel ausgebildet ist, biegen sich die beiden Schenkel des L-förmigen Seitenteils 4 bei der Verschiebung aus der in Fig. 2 dargestellten Nichtstützstellung in die in Fig. 3 dargestellte Stützstellung geringfügig aufeinander zu. Diese Relativbewegung der beiden Schenkel aufeinander zu wird durch die Flexibilität des Seitenteils 4 im Wesentlichen an der Verbindungsstelle 15 der beiden Schenkel des Seitenteils 4 ausgeglichen, indem sich der von den beiden Schenkeln eingeschlossene Winkel an der Verbindungsstellt 15 entsprechend verkleinert, da die Verbindungsstelle 15 aufgrund der Flexibilität des Seitenteils 4 nachgibt und komprimiert wird. Diese Komprimierung erzeugt eine Federkraft, die der durch die Verschiebungsbewegung des Endes 13 aufgezwungenen Relativbewegung der beiden Schenkel entgegengerichtet ist. Diese Federkraft kann dazu genutzt werden, das Seitenteil 4 in der in Fig. 3 dargestellten Stützstellung infolge der in der Längsführung 14 auftretenden Reibungskraft festzuklemmen, so dass ein zusätzlicher Arretiermechanismus zum Halten des Seitenteils 4 in der in Fig. 3 dargestellten Stützstellung nicht vorgesehen werden muss.

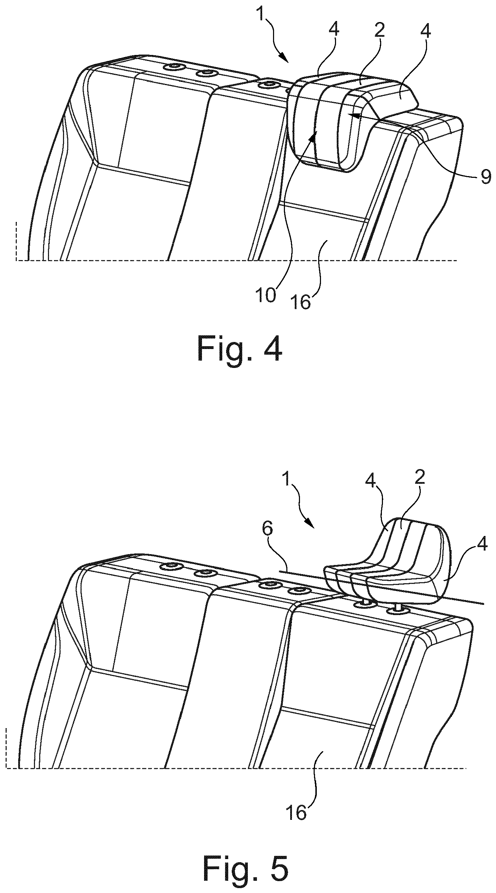

Die Fig. 4 bis 7 stellen perspektivische Vorderansichten der an einer Rückenlehne 16 eines Fahrzeugsitzes angebrachten Kopfstütze 1 aus Fig. 1 in verschiedenen Betriebsstellungen dar. Fig. 4 stellt die Kopfstütze 1 in einer ersten Nichtgebrauchsstellung dar, in der die zur Anbringung der Kopfstütze 1 an die Rückenlehne 16 des Fahrzeugsitzes vorgesehenen Stützstreben 5 (in Fig. 4 nicht zu erkennen) des Befestigungsmittels im Wesentlichen vollständig in die Rückenlehne 16 eingeschoben sind. Die Seitenteile 4 befinden sich in einer Nichtstützstellung und sind in die Kontur des Mittelteils 2 aufgenommen. Insbesondere bilden hierbei die Vorderflächen 9 der beiden Seitenteile 4 und die Vorderfläche 10 des Mittelteils 2 eine gemeinsame Vorderfläche der Kopfstütze 1. Durch die L-Form sowohl des Mittelteils 2 als auch der Seitenteile 4 der Kopfstütze 1 passt sich diese zudem im Wesentlichen bündig an die Kontur der Rückenlehne 16 an, so dass insgesamt ein optimiertes Bauvolumen des Fahrzeugsitzes erreicht wird, das die rückwärtige Sicht eines Fahrzeugführers durch die Kopfstütze 1 in dieser Nichtgebrauchsstellung nur geringfügig beeinträchtigt.

Fig. 5 stellt die Kopfstütze 1 in einer zweiten Nichtgebrauchsstellung dar, in der das Mittelteil 2 im Wesentlichen um 180 ° im Vergleich zur Darstellung der Kopfstütze 1 in den Fig. 4 und 5 um die horizontale Schwenkachse 6 nach hinten geschwenkt wurde. Diese umgeklappte Nichtgebrauchsstellung der Kopfstütze 1 wird besonders bevorzugt bei der Anbringung eines Kindersitzes (nicht dargestellt) auf dem Fahrzeugsitz, da die Kopfstütze 1 in dieser umgeklappten Nichtgebrauchsstellung kein Hindernis für den Kindersitz darstellen kann und sich dieser somit ohne Probleme auf dem Fahrzeugsitz anbringen lässt.

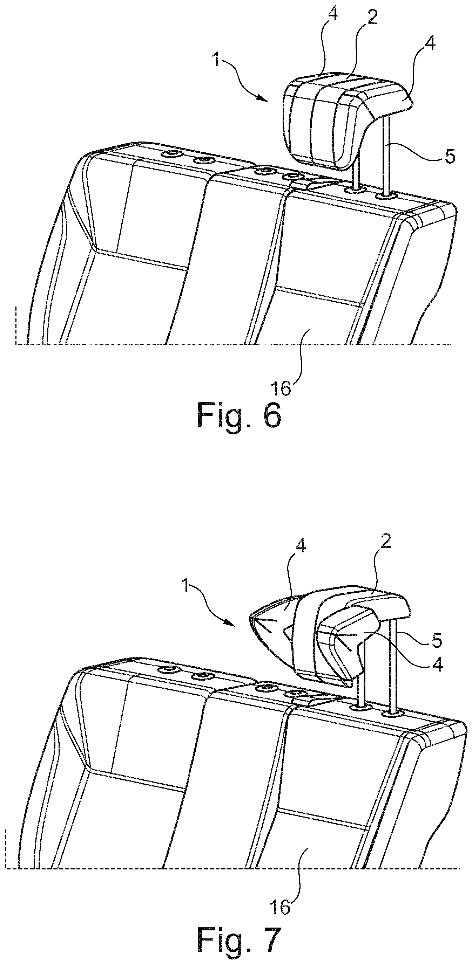

Fig. 6 stellt die Kopfstütze 1 in einer ersten Gebrauchsstellung dar, in der die höhenverstellbar in der Rückenlehne 16 aufgenommenen Stützstreben 5 aus der Rückenlehne 16 herausgezogen sind. Die Seitenteile 4 der Kopfstütze 1 befinden sich bei der dargestellten Gebrauchsstellung in einer Nichtstützstellung, die bereits in Fig. 4 dargestellt und in diesem Zusammenhang erläutert wurde. Diese Gebrauchsstellung der Kopfstütze 1 wird bevorzugt zur Abstützung des Kopfs eines erwachsenen Fahrzeuginsassen verwendet.

Fig. 7 stellt die Kopfstütze 1 in einer zweiten Gebrauchsstellung dar, in der die Stützstreben 5 aus der Rückenlehne 16 herausgezogen sind und sich die Seitenteile 4 in einer seitlichen Stützstellung befinden, die bereits in Fig. 5 dargestellt und in diesem Zusammenhang erläutert wurde. Diese Gebrauchsstellung der Kopfstütze 1 wird bevorzugt zur seitlichen Abstützung des Kopfs eines erwachsenen Fahrzeuginsassen verwendet.

Die erfindungsgemäße Kopfstütze wurde anhand eines in den Figuren dargestellten Ausführungsbeispiels näher erläutert. Die Kopfstütze ist jedoch nicht auf die hierin beschriebenen Ausführungsformen beschränkt, sondern umfasst auch gleich wirkende weitere Ausführungsformen, solange die Ausführungsformen zum Schutzumfang gehören, der durch die Ansprüche definiert ist. In bevorzugter Ausführung wird die erfindungsgemäße Kopfstütze in einem Fahrzeug, insbesondere einem Kraftfahrzeug, verwendet, wobei die Kopfstütze an einer Rückenlehne eines in dem Fahrzeug angebrachten Fahrzeugsitzes angeordnet ist.

### Bezugszeichenliste

- 1: Kopfstütze
- 2: Mittelteil
- 3: Befestigungsmittel
- 4: Seitenteil
- 5: Stützstrebe
- 6: Schwenkachse
- 7: Aussparung
- 8: Rückseite von 2
- 9: Vorderfläche von 4
- 10: Vorderfläche von 2
- 11: Seitenfläche von 2
- 12: Schwenkbewegliches Ende von 4
- 13: Längsverschiebbares Ende von 4
- 14: Längsführung
- 15: Verbindungsstelle
- 16: Rückenlehne

## Patentansprüche

1. Kopfstütze für einen Fahrzeugsitz umfassend ein Mittelteil (2), ein Befestigungsmittel (3, 5) zur Befestigung des Mittelteils (2) an einer Rückenlehne (16) des Fahrzeugsitzes und wenigstens ein Seitenteil (4), das in einer Stützstellung seitlich am Mittelteil (2) über dessen Vorderfläche (10) vorsteht und in einer Nichtstützstellung in die Kontur des Mittelteils (2) aufgenommen ist, wobei das Seitenteil (4) an einer Seitenfläche (11) des Mittelteils (2) parallel zu dieser verschiebbar angebracht ist und in der Nichtstützstellung im Wesentlichen L-förmig ausgebildet ist,
**dadurch gekennzeichnet, dass**
das Seitenteil (4) flexibel ist, wobei ein Ende (12) des L-förmigen Seitenteils (4) an der Seitenfläche (11) des Mittelteils (2) schwenkbeweglich angebracht ist und das andere Ende (13) des L-förmigen Seitenteils (2) an der Seitenfläche (11) des Mittelteils (2) längsverschiebbar angebracht ist.

2. Kopfstütze nach dem vorhergehenden Anspruch,
**dadurch gekennzeichnet, dass**
das Mittelteil (2) im Wesentlichen L-förmig ausgebildet ist, wobei ein Schenkel der L-Form einer Oberseite des Mittelteils (2) entspricht und der andere Schenkel der Vorderfläche (10) des Mittelteils (2) entspricht.

3. Kopfstütze nach einem der vorhergehenden Ansprüche,
**dadurch gekennzeichnet, dass**
das Befestigungsmittel (3, 5) dazu ausgelegt ist, das Mittelteil (2) relativ zur Rückenlehne (16) um eine horizontale Schwenkachse (6) zwischen wenigstens einer Gebrauchsstellung und einer Nichtgebrauchsstellung schwenkbar zu lagern.

4. Kopfstütze nach dem vorhergehenden Anspruch,
**dadurch gekennzeichnet, dass**
das Befestigungsmittel (3) zwei Stützstreben (5) umfasst, an denen das Mittelteil (2) schwenkbeweglich gelagert ist, und das Mittelteil (2) im Bereich der Lagerstellen der Stützstreben (5) an dem Mittelteil (2) jeweils eine schlitzförmige Aussparung (7) aufweist, die sich von der jeweiligen Lagerstelle bis zu einer Rückseite (8) des Mittelteils (2) erstreckt.

5. Kopfstütze nach einem der vorhergehenden Ansprüche,
**dadurch gekennzeichnet, dass**
das Befestigungsmittel (3, 5) Mittel zur Höhenverstellung der Kopfstütze (1) umfasst.

6. Fahrzeugsitz mit einer Rückenlehne (16) und einer daran angeordneten Kopfstütze (1),
**dadurch gekennzeichnet, dass**
die Kopfstütze (1) gemäß einem der vorhergehenden Ansprüche ausgebildet ist.

7. Fahrzeugsitz nach dem vorhergehenden Anspruch,
**dadurch gekennzeichnet, dass**
die Rückenlehne (16) umklappbar ist.

## Claims

1. Head restraint for a vehicle seat, comprising a central part (2), a fastening means (3, 5) for fastening the central part (2) to a backrest (16) of the vehicle seat, and at least one side part (4) which, in a supporting position, protrudes laterally on the central part (2) over the front surface (10) thereof and, in a non-supporting position, is received into the contour of the central part (2), wherein the side part (4) is attached to a side surface (11) of the central part (2) so as to be displaceable parallel to said side surface and, in the non-supporting position, is of substantially L-shaped design,
**characterized in that**
the side part (4) is flexible, wherein one end (12) of the L-shaped side part (4) is attached pivotably to the side surface (11) of the central part (2) and the other end (13) of the L-shaped side part (2) is attached in a longitudinally displaceable manner to the side surface (11) of the central part (2).

2. Head restraint according to the preceding claim, **characterized in that** the central part (2) is of substantially L-shaped design, wherein one limb of the L-shape corresponds to an upper side of the central part (2) and the other limb corresponds to the front surface (10) of the central part (2).

3. Head restraint according to either of the preceding claims, **characterized in that** the fastening means (3, 5) is designed in order to mount the central part (2) pivotably relative to the backrest (16) about a horizontal pivot axis (6) between at least one use position and a non-use position.

4. Head restraint according to the preceding claim, **characterized in that** the fastening means (3) comprises two supporting struts (5) on which the central part (2) is pivotably mounted, and, in the region of the bearing points of the supporting struts (5) on the central part (2), the central part (2) in each case has a slot-like recess (7) which extends from the respective bearing point as far as a rear side (8) of the central part (2).

5. The head restraint according to one of the preceding claims, **characterized in that** the fastening means (3, 5) comprises means for adjusting the height of the head restraint (1).

6. Vehicle seat with a backrest (16) and a head restraint (1) arranged thereon, **characterized in that** the head restraint (1) is designed according to one of the preceding claims.

7. Vehicle seat according to the preceding claim, **characterized in that** the backrest (16) can be folded down.

## Revendications

1. Appuie-tête pour siège de véhicule, comprenant une partie centrale (2), un moyen de fixation (3, 5) qui fixe la partie centrale (2) sur le dossier (16) du siège du véhicule, et au moins une partie latérale (4) qui déborde latéralement de la surface avant (10) de la partie centrale (2) dans une position de soutien et qui est incorporée dans le contour de la partie centrale (2) en position de non soutien,
la partie latérale (4) étant placée sur une surface latérale (11) de la partie centrale (2), à coulissement parallèle par rapport à celle-ci, et ayant essentiellement la forme d'un L en position de non soutien,
**caractérisé en ce que**
la partie latérale (4) est flexible,
**en ce qu'**une extrémité (12) de la partie latérale (4) en forme de L est placée à pivotement sur une surface latérale (11) de la partie centrale (2) et l'autre extrémité (13) de la partie centrale (2) en forme de L est placée à coulissement longitudinal sur la surface latérale (11) de la partie centrale (2).

2. Appuie-tête selon la revendication précédente, **caractérisé en ce que** la partie centrale (2) est essentiellement en forme de L, une branche de la forme du L correspondant au côté supérieur de la partie centrale (2) et l'autre branche à la surface avant (10) de la partie centrale (2).

3. Appuie-tête selon l'une des revendications précédentes, **caractérisé en ce que** le moyen de fixation (3, 5) est conçu pour monter la partie centrale (2) à pivotement par rapport au dossier (16) autour d'un axe horizontale de pivotement (6), entre au moins une position d'utilisation et une position de non utilisation.

4. Appuie-tête selon l'une des revendications précédentes, **caractérisé en ce que** le moyen de fixation (3) comporte deux entretoises de soutien (5) sur lesquelles la partie centrale (2) est montée à pivotement, la partie centrale (2) présentant au niveau des emplacements de montage des entretoises de soutien (5) sur la partie centrale (2) une découpe (7) en forme de fente qui s'étend depuis l'emplacement de montage correspondant jusqu'au côté arrière (8) de la partie centrale (2).

5. Appuie-tête selon l'une des revendications précédentes, **caractérisé en ce que** le moyen de fixation (3, 5) comporte des moyens d'ajustement en hauteur de l'appuie-tête (1).

6. Siège de véhicule présentant un dossier (16) sur lequel est disposé un appuie-tête (1), **caractérisé en ce que** l'appuie-tête (1) est configuré selon l'une des revendications précédentes.

7. Siège de véhicule selon la revendication précédente, **caractérisé en ce que** le dossier (16) est rabattable.
